# EUROPEAN PATENT SPECIFICATION

(11) **EP 1 360 091 B1**
(45) Date of publication and mention of the grant of the patent: **27.07.2005**
(21) Application number: 02740062.1
(22) Date of filing: 04.01.2002
(51) Int. Cl.: B60R 17/00, F01M 5/00, F16N 39/00, F16H 57/04

(54) **A TEMPERATURE REGULATING SYSTEM**
TEMPERATURREGELSYSTEM
SYSTEME REGULATEUR DE TEMPERATURE

(30) Priority: 07.02.2001 SE 0100386
(43) Date of publication of application: 12.11.2003
(73) Proprietor: Volvo Construction Equipment Components AB, 635 81 Eskilstuna (SE)
(72) Inventor: CARLSSON, Sven-Ake, S-632 39 Eskilstuna (SE)
(74) Representative: Fröhling, Werner
(86) International application number: PCT/SE2002/000010
(87) International publication number: WO 2002/062624

(56) References cited:
- WO-A1-99/43931
- DE-A1- 4 140 667

## Description

### FIELD OF THE INVENTION

The present invention relates to a temperature regulating system for a vehicle, the system comprises a hydraulic arrangement which is adapted to provide components intended for rotation located in a gearbox of the vehicle and in at least one of the axles of the vehicle with hydraulic oil from the same container. The invention will be described below for a case where the temperature regulating system is installed in a construction vehicle in the form of a wheel loader. This is a preferred, but in no way limiting, application of the invention.

An example of an application of the temperature regulating system is for heating/cooling a lubricating oil for the gearbox of the vehicle. This comprises a number of interacting gear wheels. In order to reduce wear of these during operation, they are lubricated with the oil. The lubricating oil functions worse when it is cold. It is therefore desirable, for example when the vehicle is cold-started, for it to be possible to heat the oil. After a period of operation of the gearbox, there is also a risk of the lubricating oil becoming so hot that the gearbox or the hydraulic system will be damaged. It is then desirable for it to be possible to cool the lubricating oil.

### PRIOR ART

DE 4140667 A discloses a system according to the preamble of claim 1, comprising a lubrication arrangement for a vehicle. The same lubrication oil is provided to several devices, such as the engine, the gearbox, the retarder and the axles.

WO 99/43931 describes a temperature regulating system for a wheel loader. The system comprises a first hydraulic arrangement for providing the hydraulic cylinders of the vehicle, which drive the shovel of the vehicle, with hydraulic oil. The system also comprises an arrangement for cooling the internal combustion engine of the vehicle. The cooling arrangement is connected to the hydraulic arrangement via a first heat exchanger. A charge air cooler for the turbo compressor of the vehicle is located upstream of the heat exchanger in the flow direction of the coolant in the coolant circuit.

This construction is advantageous, for example, when the internal combustion engine is cold-started. The charge air cooler cools the charge air as soon as the internal combustion engine is started, which results in rapid heating up of the hydraulic oil via the first heat exchanger.

During operation of the shovel, the hydraulic oil may become too hot to function effectively as a working fluid. The temperature regulating system is adapted to sense this and, in such a case, the oil is cooled. This is brought about by a further heat exchanger, namely the radiator of the vehicle, being arranged in the coolant circuit. In such a case, the coolant is cooled in this further heat exchanger.

WO 99/43931 also describes how the temperature regulating system can comprise a second hydraulic arrangement for providing the transmission of the vehicle with oil. The cooling arrangement is then connected to this second hydraulic arrangement via a second heat exchanger.

WO 99/43931 further describes how the temperature regulating system can comprise a third hydraulic arrangement for providing the axles of the vehicle with oil. The cooling arrangement is then connected to this third hydraulic arrangement via a third heat exchanger.

In different operating states, the various parts which require a supply of hydraulic oil are loaded to different degrees. One example of an operating state is short cycle load, in which the transmission of the vehicle is hot and the axles are cold. Another example of an operating state is transport driving, in which the axles of the vehicle are hot and the transmission is cold. When the operating state is changed, it is necessary to heat up the hydraulic oil to be supplied to the part used in the intended operating state before it will function optimally. It would therefore be desirable to produce a vehicle with improved energy utilization.

### SUMMARY OF THE INVENTION

A first object of the invention is to produce a temperature regulating system for a vehicle, which affords opportunities for more effective operation of the vehicle with regard to efficiency in relation to the prior art. A further object is to bring about reduced wear, in relation to the prior art, of components of the vehicle intended for rotation, which are cooled and/or lubricated. A further object is that the temperature regulating system should afford opportunities for more cost-effective manufacture of the vehicle. The temperature regulating system is moreover intended to afford opportunities for simple and time-efficient maintenance thereof.

These objects are achieved by virtue of the fact that the hydraulic arrangement comprises at least two pumps, namely one for suction of oil from a gearbox space housing said components and one for suction of oil from a vehicle axle space housing said components and that at least one space for housing at least one of said components is adapted for a dry sump. Said rotation components mean, for example, gear wheels, axles and disks in brakes. Thanks to the presence of said two pumps, which are known as drainage pumps, the gearbox and the axle will each be drained of oil irrespective of any relative difference in their oil quantities.

By virtue of the fact that the same hydraulic oil is used for heating/cooling and lubricating said rotating components of the gearbox and the axles, the hydraulic oil which is supplied, when the operating state is changed, to one of these which was essentially unloaded during the first operating state will already be hot at the start of the following operating state.

When required, it is of course also possible to use this mode of arrangement to cool a part which has heated up during operation by cooling the oil which is supplied to this part.

According to the prior art, each of the hydraulic arrangements for the axles, the gearbox and the hydraulic cylinders comprises a separate hydraulic tank. By virtue of the fact that, according to the invention, use is made of one and the same container for the hydraulic oil for both the gearbox and the axles of the vehicle, the number of hydraulic tanks necessary according to the prior art can be reduced to just one.

As the gearbox and the axles are provided with oil from the same tank, a smaller quantity of hydraulic oil is required overall. Furthermore, opportunities are afforded for a more space-efficient hydraulic arrangement. Thanks to the smaller quantity of hydraulic oil, the invention is also advantageous from an environmental point of view. By virtue of the fact that use is made of only one container, the hydraulic oil is topped up/changed in only one place, which is time-efficient.

By virtue of the fact that at least one space for housing at least one of said components is adapted for a dry sump, power losses related to the fact that components rotate in an oil bath can be reduced. These losses are usually referred to as drag losses.

According to another embodiment, the hydraulic arrangement comprises at least one first pump for pumping oil from the container to the gearbox and to the vehicle axle.

According to another embodiment, each of the second pumps for removing oil from the gearbox and, respectively, the axle has a pump capacity which is at least the same as and preferably greater than that of the first pump for supplying oil connected to the gearbox and to the axle. Therefore, with suitable selection of the size of the second pump and the positioning and operation thereof, when hydraulic oil is supplied to, for example, the rear axle of the vehicle, the rear axle box will be continuously drained of the hydraulic oil supplied.

According to another embodiment, the container is located apart from said rotating components forming part of the axle and from said rotating components forming part of the gearbox. In this way, power losses related to the fact that components rotate in an oil bath can be reduced. These losses are usually referred to as drag losses.

According to another embodiment, the temperature regulating system comprises an arrangement for regulating the temperature of the oil in the hydraulic arrangement via a heat exchanger unit. This temperature regulating arrangement is also adapted to cool the engine of the vehicle. One advantage of this mode of arrangement is when what are known as cold starts take place. When the vehicle is started, the engine is set going while the gearbox is in neutral. This results in the engine heating up more rapidly than the gearbox. Thanks to the arrangement of the heat exchanger unit, heat can be transferred from the coolant of the engine to the hydraulic oil and in this way heats it up rapidly.

### BRIEF DESCRIPTION OF THE DRAWINGS

The invention will be described in greater detail below with reference to the embodiment shown in the accompanying drawing.
Figure 1 shows a hydraulic oil and coolant diagram for the temperature regulating system in schematic form.
Figure 2 shows a block diagram of a control arrangement according to the invention.

### DETAILED DESCRIPTION OF A PREFERRED EMBODIMENT OF THE INVENTION

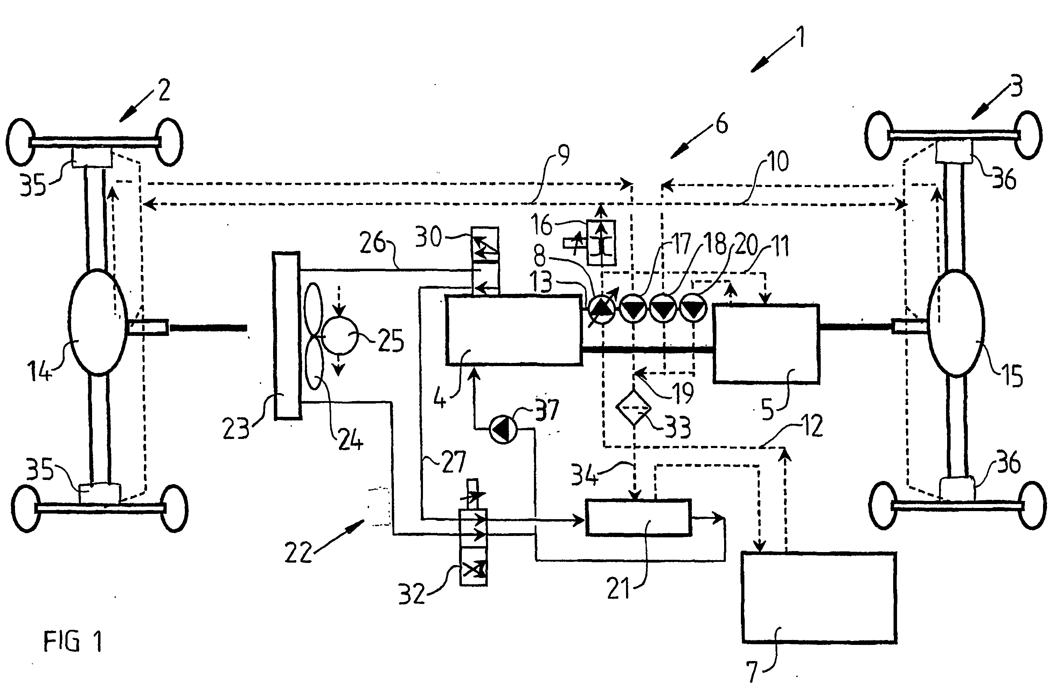

Figure 1 shows a hydraulic oil and coolant diagram for a temperature regulating system 1 for a vehicle in the form of a wheel loader. The wheel loader comprises a rear axle 2, a front axle 3, a diesel engine 4- and a gearbox 5 connected to the engine. Connected between the gearbox 5 and the rear axle and also the front axle is a transfer gearbox (not shown) for distributing the power to the rear axle and the front axle.

In this context, rear axle or front axle 2, 3 means the whole mechanical construction which transmits the driving power to driving wheels on the right and the left side of the axle. The rear axle 2 comprises a rear axle box which encloses a central gear 14, by means of which the driving power is turned through 90°. From the central gear, the driving power is transmitted via driving axles to the driving wheels. The central gear comprises a pinion, a drive gear and a differential gear. A hub reduction gear in the form of a planetary gear (not shown) is also arranged at each wheel. By means of the hub reduction gear, a reduction of the speed to the driving wheels is brought about. The gear wheels forming part of the central gear and the hub reduction gear require lubrication. The rear axle box also encloses a brake 35 arranged at the respective wheel. The brake is what is known as a wet brake and comprises a set of brake disks enclosed in a housing. The disks are cooled by an oil.

The temperature regulating system 1 comprises a hydraulic arrangement 6 which is adapted to provide components intended for rotation belonging to the axles 2, 3 of the vehicle with hydraulic oil from a container 7 via a hydraulic oil circuit. The expression "components intended for rotation" means, for example, said gear wheels in the central gear 14, 15 and the hub reduction gear and also the disks in the brakes 35, 36. In other words, the same oil is used for lubricating the gear wheels and cooling the disks. In figure 1, pipes for the hydraulic oil are illustrated by broken lines.

The tasks of the oil are to lubricate bearings and tooth engagement, to create friction in multiple disk clutches and multiple disk brakes and to transfer heat and cold. The hydraulic oil used is therefore intended for on the one hand temperature regulation, that is to say heating and cooling, and on the other hand lubrication of rotating components.

A first part 9 of the hydraulic oil circuit is connected to the rear axle 2, and a second part 10 of the hydraulic oil circuit is connected to the front axle 3.

The gearbox 5 comprises a number of shafts. Arranged on each of these is a number of gear wheels. The gear wheels are engaged and disengaged depending on the gear selected. The hydraulic arrangement 6 is also adapted to provide the gear wheels in the gearbox 5 of the vehicle with hydraulic oil from said container 7. A third part 11 of the hydraulic oil circuit is to this end connected to the gearbox 5. The hydraulic oil can also be provided to disks of the clutch means of the gearbox 5.
The hydraulic arrangement 6 comprises said container 7 for the hydraulic oil and a first pump 8 for suction of the oil via a pipe 12, common to the hydraulic oil circuit parts 9, 10, 11, from the container 7. The common pipe 12 divides into the hydraulic oil circuit parts 9, 10, 11 for the gearbox 5 and for the axles 2, 3. A flow valve 16 is arranged on the pipe 12 in order to distribute the oil to the axles.

The hydraulic arrangement 6 also comprises two drainage pumps 17, 18 for pumping the oil supplied to the rear axle 2 and, respectively, the front axle 3 back to the container 7. The pipes from the drainage pumps 17, 18 are combined at a point 19.

The hydraulic arrangement also comprises a drainage pump 20 for pumping the oil supplied to the gearbox 5 back to the container 7. A pipe from the drainage pump 20 is combined with the pipes from the drainage pumps 17, 18 of the axles at the point 19. A common pipe 34 leads from the point 19 where the pipes are combined to a heat exchanger unit 21.

A cleaning unit in the form of a filter, or a strainer, 33 is connected on a pipe between the axles 2, 3 and the container 7. The filter 33 is arranged on the pipe 34 between the drainage pumps 17, 18, 20 and the heat exchanger unit 21. In the event of damage in one of the axles, undesirable particles will be filtered out and will therefore not find their way into and dirty the hydraulic oil container 7.

Each of the pumps 8, 17, 18, 20 is adapted to provide a flow which corresponds to the engine speed. In this embodiment, the pumps 8, 17, 18, 20 are therefore arranged on a crankshaft 13 from the diesel engine 4.

The temperature regulating system 1 comprises an arrangement 22 for regulating the temperature of the oil in the hydraulic arrangement 6 via the heat exchanger unit 21. The temperature regulating arrangement 22 is also adapted to cool the engine 4 of the vehicle. To be precise, the heat exchanger unit 21 is adapted for heat exchange between the oil pumped from the gearbox 5 and the axles 2, 3 and coolant from the diesel engine 4. The heat exchanger unit 21 is arranged upstream of the container 7 in the flow direction of the hydraulic oil. In figure 1, pipes for the coolant are illustrated by solid lines.

The temperature regulating arrangement 22 comprises a coolant pump 37 which pumps the coolant in a coolant circuit. To be precise, the coolant is pumped through cooling ducts in the engine block and cylinder head of the engine 4 and, in a first part 26 of the coolant circuit, on to a radiator 23. A fan 24, which is driven by a separate hydraulic motor 25, blows air onto the radiator 23, and the coolant is thus cooled in a manner known per se. The coolant is pumped from the radiator 23 to the heat exchanger unit 21 and then back to the engine 4. A second part 27 of the coolant circuit is connected in parallel with the radiator 23. When the coolant is led through this second part 27, it is therefore not cooled by the radiator 23. The temperature regulating arrangement comprises a directional valve 30 for directing the coolant to the coolant circuit parts 26, 27.

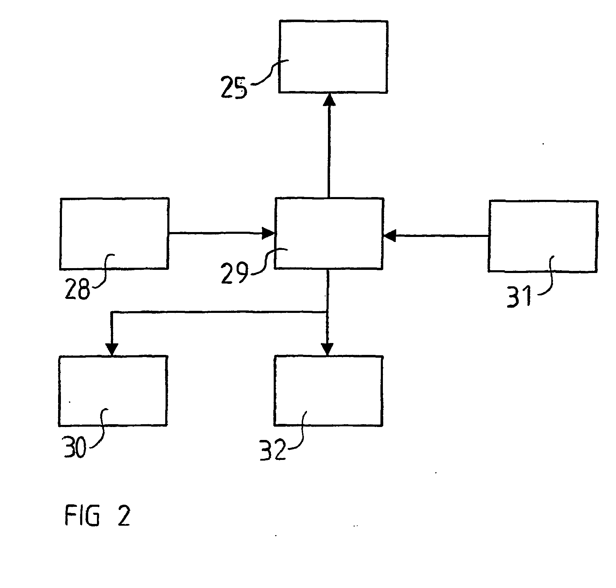

The temperature regulating system 1 comprises a sensor 28, see figure 2, for sensing the temperature of the oil and a control unit 29 connected to the sensor. The control unit 29 is also connected to the directional valve 30 for controlling the position thereof. The temperature regulating arrangement is adapted to cool or heat the oil depending on the sensed oil temperature. The temperature regulating system also comprises a sensor 31 for sensing the temperature of the coolant of the engine and another directional valve 32 adapted to direct the coolant into a pipe to the heat exchanger unit 21 or past it. The sensor 31 and the directional valve 32 are connected to the control unit 29. The control unit 29 itself comprises a memory, which includes software segments, for controlling the hydraulic motor 25 and the directional valves 30, 32 depending on the temperatures of the hydraulic oil and the coolant sensed by the sensors 28 and, respectively, 31.

When the vehicle is cold-started, the hydraulic oil is cold. The engine coolant is led through the pipe 27 parallel to the radiator 23 to the heat exchanger unit 21 in order to heat the oil. At a predetermined oil temperature, for example 65°C, the directional valve 30 is switched over so that coolant is led through the radiator 23. This coolant is then cooled down by the radiator. The directional valve 32 is set in such a position that the liquid cooled in the radiator 23 is led past the heat exchanger unit 21, that is to say not through it. At a second predetermined oil temperature, for example 87°C, the directional valve 32 is switched over so that the liquid cooled in the radiator 23 is led through the heat exchanger unit 21. The oil will then be cooled. In other words, when the hydraulic oil has reached a suitable working temperature, the coolant will instead lead superfluous heat away from the hydraulic oil for the purpose of keeping the hydraulic oil temperature at a suitable level.

The oil temperature sensor 28 is, for example, arranged in the hydraulic oil container 7. The coolant sensor 31 is, for example, arranged in the radiator 23.

The hydraulic oil container 7 is positioned apart from both the axles 2, 3 and the gearbox 5, and the hydraulic oil is pumped to these parts. According to the prior art, the rear axle box served as a container for the hydraulic oil. The gear wheels in the central gear then rotated in an oil bath. By virtue of said positioning of the hydraulic oil container 7, the power losses in the form of what are known as drag or splash losses, which arise when components rotate in the oil bath, can be reduced. To this end, the system is of the dry sump type. The oil is now sprayed, injected or sprinkled instead onto the components which require lubrication or cooling and the oil is subsequently sucked away from the space concerned, such as the axle box and the gearbox casing.

To this end, the system comprises spraying means, which can consist of a nozzle or another opening connected to the hydraulic oil supply pipe. The system also comprises means for removing the oil in said space. Such oil removal means consist of one of said pumps. The oil removal means are adapted essentially to suck the space dry. This means that no oil or only a small quantity of oil is present in an inactive state in the space, that is to say in the bottom of the space. As the axle box will not serve as a container for the hydraulic oil, the box can moreover be made smaller, which is cost-effective from the point of view of manufacture.

The pumps 8, 17, 18, 20 are adapted for pumping in such a manner that hydraulic oil is pumped essentially continuously to and from the gearbox 5 and, respectively, the axles 2, 3.

The pump 20 for pumping hydraulic oil from the gearbox 5 is adapted to pump oil essentially continuously from a vessel, located in the gearbox, for collecting the oil supplied to the gear wheels of the gearbox.

The vehicle consists of a transport machine. Transport machine means, for example, a loader for transporting materials or objects, such as a truck, a wheel loader, an articulated or frame-steered vehicle (what is known as a dumper), and vehicles for transporting people, such as a bus.

The invention is not to be considered as being limited to the embodiment described above, but a number of further variants and modifications are possible within the scope of the patent claims below.

According to one alternative to the embodiment described above, the brakes 35, 36 are cooled separately. In other words, the hydraulic oil is not pumped from the temperature regulating system to the wheel brakes.

According to another embodiment, the hydraulic arrangement is also adapted to provide the transfer gearbox of the vehicle with hydraulic oil from the container 7.

It is of course also within the scope of the invention for the temperature regulating system to have, in addition to said container 7, one or more further containers for the hydraulic oil. In other words, the same oil is in such a case still used for all the components in the system.

## Claims

1. A temperature regulating system for a vehicle, the system comprises a container (7) for hydraulic oil and a hydraulic arrangement (6) which is adapted to provide components intended for rotation located in a gearbox (5) of the vehicle and in at least one of the axles (2, 3) of the vehicle with hydraulic oil from the same container (7) **characterized in that** the hydraulic arrangement (6) comprises at least two pumps (17, 18, 20), namely one (20) for suction of oil from a gearbox space housing said components and one (17, 18) for suction of oil from a vehicle axle space housing said components and that at least one space for housing at least one of said components is adapted for a dry sump.

2. The temperature regulating system as claimed in claim 1, **characterized in that** the hydraulic arrangement (6) comprises means for spraying the hydraulic oil over said components and means (17, 18, 20) for removing the oil from said space.

3. The temperature regulating system as claimed in claim 2, **characterized in that** said oil removal means (17, 18, 20) are adapted to remove the oil continuously from the space during operation of the vehicle in such a manner that no oil or only a small quantity of oil is present in an inactive state in the space.

4. The temperature regulating system as claimed in any one of the preceding claims, **characterized in that** the hydraulic arrangement (6) comprises at least one first pump (8) for pumping oil from the container (7) to the gearbox (5) and to the vehicle axle (2, 3).

5. The temperature regulating system as claimed in claim 4, **characterized in that** each of the second pumps (17, 18, 20) for removing oil from the gearbox (5) and, respectively, the axle (2, 3) has a pump capacity which is at least the same as and preferably greater than that of the first pump (8) for supplying oil connected to the gearbox and to the axle.

6. The temperature regulating system as claimed in any one of the preceding claims, **characterized in that** the container (7) is located apart from the space in which said rotating components forming part of the axle (2, 3) are arranged.

7. The temperature regulating system as claimed in any one of the preceding claims, **characterized in that** the container (7) is located apart from the space in which said rotating components forming part of the gearbox (5) are arranged.

8. The temperature regulating system as claimed in any one of the preceding claims, **characterized in that** said components intended for rotation located in the axles (2, 3) of the vehicle comprise on the one hand disks in a wet brake (35, 36) and on the other hand gear wheels in a gear (14, 15).

9. The temperature regulating system as claimed in any one of the preceding claims, **characterized in that** the temperature regulating system (1) comprises an arrangement (22) for regulating the temperature of the oil in the hydraulic arrangement (6) via a heat exchanger unit (21).

10. The temperature regulating system as claimed in claim 9, **characterized in that** the temperature regulating arrangement (22) is also adapted to cool the engine (4) of the vehicle.

11. The temperature regulating system as claimed in claim 9 or 10, **characterized in that** the temperature regulating arrangement (22) comprises a sensor (28) for sensing the temperature of the oil and a control unit (29) connected to the sensor, and **in that** the temperature regulating arrangement is adapted to cool or heat the oil depending on the sensed oil temperature.

12. The temperature regulating system as claimed in claims 10 and 11, **characterized in that** the temperature regulating arrangement (22) comprises a sensor (31) connected to the control unit (29) for sensing the temperature of the coolant of the engine.

13. Use of the temperature regulating system as claimed in any one of the preceding claims, in a transport machine.

14. Use of the temperature regulating system as claimed in any of claims 1-12, in a construction machine.

## Patentansprüche

1. Temperaturregulierungssystem für ein Fahrzeug, wobei das System einen Behälter (7) für Hydrauliköl und eine hydraulische Anordnung (6) umfasst, die zur Versorgung von für eine Drehung bestimmten Komponenten, die in einem Getriebe (5) des Fahrzeugs und in wenigstens einer der Achsen (2, 3) des Fahrzeugs angeordnet sind, mit Hydrauliköl aus demselben Container (7) geeignet ist, **dadurch gekennzeichnet, dass** die hydraulische Anordnung (6) wenigstens zwei Pumpen (17, 18, 20) umfasst, nämlich eine (20) für ein Ansaugen von Öl aus einem Getrieberaum, in dem die Komponenten untergebracht sind, und eine (17, 18) für eine Ansaugung von Öl aus einem Fahrzeugachsenraum, in dem die Komponenten untergebracht sind, und dass wenigstens ein Raum für eine Unterbringung wenigstens einer der Komponenten für einen Trockensumpf geeignet ist.

2. Temperaturregulierungssystem nach Anspruch 1, **dadurch gekennzeichnet, dass** die hydraulische Anordnung (6) Mittel zum Sprühen des Hydrauliköls über die Komponenten und Mittel (17, 18, 20) zur Entfernung des Öls aus dem Raum umfasst.

3. Temperaturregulierungssystem nach Anspruch 2, **dadurch gekennzeichnet, dass** die Ölentfernungsmittel (17, 18, 20) für eine fortlaufende Entfernung des Öls aus dem Raum während des Betriebs des Fahrzeugs so geeignet sind, dass kein Öl oder nur eine geringe Menge an Öl in einem nichtaktiven Zustand in dem Raum vorhanden ist.

4. Temperaturregulierungssystem nach einem der vorhergehenden Ansprüche, **dadurch gekennzeichnet, dass** die hydraulische Anordnung (9) wenigstens eine erste Pumpe (8) für ein Pumpen von Öl aus dem Container (7) zu dem Getriebe (5) und zu der Fahrzeugachse (2, 3) umfasst.

5. Temperaturregulierungssystem nach Anspruch 4, **dadurch gekennzeichnet, dass** jede der zweiten Pumpen (17, 18, 20) zur Entfernung von Öl aus dem Getriebe (5) bzw. der Achse (2, 3) eine Förderleistung aufweist, die wenigstens dieselbe oder bevorzugt größer ist, als die der ersten Pumpe (8) für eine Zufuhr von Öl, die mit dem Getriebe und der Achse verbunden ist.

6. Temperaturregulierungssystem nach einem der vorhergehenden Ansprüche, **dadurch gekennzeichnet, dass** der Behälter (7) abseits von dem Raum angeordnet ist, in dem die drehenden Komponenten angeordnet sind, die einen Teil der Achse (2, 3) bilden.

7. Temperaturregulierungssystem nach einem der vorhergehenden Ansprüche, **dadurch gekennzeichnet, dass** der Container (7) abseits von dem Raum angeordnet ist, in dem die drehenden Komponenten angeordnet sind, die einen Teil des Getriebes (5) bilden.

8. Temperaturregulierungssystem nach einem der vorhergehenden Ansprüche, **dadurch gekennzeichnet, dass** die zur Drehung bestimmten Komponenten, die in den Achsen (2, 3) des Fahrzeugs angeordnet sind, auf der einen Seite Scheiben in einer Nassbremse (35, 36) und auf der anderen Seite Zahnräder in einem Getriebe (14, 15) umfassen.

9. Temperaturregulierungssystem nach einem der vorhergehenden Ansprüche, **dadurch gekennzeichnet, dass** das Temperaturregulierungssystem (1) eine Anordnung (22) zur Regulierung der Temperatur des Öls in der hydraulischen Anordnung (6) über eine Wärmetauschereinheit (20) umfasst.

10. Temperaturregulierungssystem nach Anspruch 9, **dadurch gekennzeichnet, dass** die Temperaturregulierungsanordnung (22) außerdem zur Kühlung des Motors (4) des Fahrzeugs geeignet ist.

11. Temperaturregulierungssystem nach Anspruch 9 oder 10, **dadurch gekennzeichnet, dass** die Temperaturregulierungsanordnung (22) einen Sensor (28) zur Erfassung der Temperatur des Öls und eine mit dem Sensor verbundene Steuereinheit (29) umfasst, und dass die Temperaturregulieranordnung zur Kühlung oder Erwärmung des Öls abhängig von der erfassten Öltemperatur geeignet ist.

12. Temperaturregulierungssystem nach Anspruch 10 und 11, **dadurch gekennzeichnet, dass** die Temperaturregulieranordnung (22) einen mit der Steuereinheit (29) verbundenen Sensor (31) zur Erfassung der Temperatur des Kühlmittels des Motors umfasst.

13. Verwendung des Temperaturregulierungssystems nach einem der vorhergehenden Ansprüche in einer Transportmaschine.

14. Verwendung des Temperaturregulierungssystems nach einem der Ansprüche 1 bis 12 in einer Baumaschine.

## Revendications

1. Système de régulation de température pour un véhicule, le système comportant un conteneur (7) pour de l'huile hydraulique et un agencement hydraulique (6) qui est adapté pour fournir des organes prévus pour une rotation, situés dans une boîte d'engrenages (5) du véhicule et dans au moins un des essieux (2, 3) du véhicule en utilisant de l'huile hydraulique provenant du même conteneur (7), **caractérisé en ce que** l'agencement hydraulique (6) comporte au moins deux pompes (17, 18, 20), à savoir une pompe (20) pour aspirer de l'huile à partir d'un espace de boîte d'engrenages recevant lesdits organes et une pompe (17, 18) pour aspirer de l'huile à partir d'un espace d'essieu de véhicule recevant lesdits organes et **en ce qu'**au moins un espace destiné à recevoir au moins un desdits organes est adapté pour un carter sec.

2. Système de régulation de température selon la revendication 1, **caractérisé en ce que** l'agencement hydraulique (6) comporte des moyens pour pulvériser de l'huile hydraulique sur lesdits organes, et des moyens (17, 18, 20) pour retirer l'huile dudit espace.

3. Système de régulation de température selon la revendication 2, **caractérisé en ce que** lesdits moyens de retrait d'huile (17, 18, 20) sont adaptés pour retirer l'huile de manière continue à partir de l'espace pendant un fonctionnement du véhicule, de telle sorte qu'une quantité d'huile nulle ou uniquement petite est présente dans un état inactif dans l'espace.

4. Système de régulation de température selon l'une quelconque des revendications précédentes, **caractérisé en ce que** l'agencement hydraulique (6) comporte au moins une première pompe (8) pour transférer par pompage de l'huile depuis le conteneur (7) jusqu'à la boîte d'engrenages (5) et jusqu'à l'essieu de véhicule (2, 3).

5. Système de régulation de température selon la revendication 4, **caractérisé en ce que** chacune des secondes pompes (17, 18, 20) pour retirer de l'huile à partir de la boîte d'engrenages (5) et, respectivement, à partir de l'essieu (2, 3) a une capacité de refoulement qui est au moins identique et de préférence supérieure à celle de la première pompe (8) destinée à délivrer de l'huile, reliée à la boîte d'engrenages et à l'essieu.

6. Système de régulation de température selon l'une quelconque des revendications précédentes, **caractérisé en ce que** le conteneur (7) est positionné séparément de l'espace dans lequel lesdits organes rotatifs formant une partie de l'essieu (2, 3) sont agencés.

7. Système de régulation de température selon l'une quelconque des revendications précédentes, **caractérisé en ce que** le conteneur (7) est positionné séparément de l'espace dans lequel lesdits organes rotatifs formant une partie de la boîte d'engrenages (5) sont agencés.

8. Système de régulation de température selon l'une quelconque des revendications précédentes, **caractérisé en ce que** lesdits organes prévus pour une rotation, situés dans les essieux (2, 3) du véhicule comportent d'une part des disques dans un frein humide (35, 36) et d'autre part des roues d'engrenage dans un engrenage (14, 15).

9. Système de régulation de température selon l'une quelconque des revendications précédentes, **caractérisé en ce que** le système de régulation de température (1) comporte un agencement (22) pour réguler la température de l'huile dans l'agencement hydraulique (6) par l'intermédiaire d'une unité formant échangeur de chaleur (21).

10. Système de régulation de température selon la revendication 9, **caractérisé en ce que** l'agencement de régulation de température (22) est également adapté pour refroidir le moteur (4) du véhicule.

11. Système de régulation de température selon la revendication 9 ou 10, **caractérisé en ce que** l'agencement de régulation de température (22) comporte un capteur (28) pour détecter la température de l'huile et une unité de commande (29) reliée au capteur, et **en ce que** l'agencement de régulation de température est adapté pour refroidir ou pour chauffer l'huile en fonction de la température d'huile détectée.

12. Système de régulation de température selon les revendications 10 et 11, **caractérisé en ce que** l'agencement de régulation de température (22) comporte un capteur (31) relié à l'unité de commande (29) pour détecter la température du liquide de refroidissement du moteur.

13. Utilisation du système de régulation de température selon l'une quelconque des revendications précédentes, dans une machine de transport.

14. Utilisation du système de régulation de température selon l'une quelconque des revendications 1 à 12, dans une machine de construction.
